# EUROPÄISCHE PATENTSCHRIFT

(11) **EP 3 189 262 B1**
(45) Veröffentlichungstag und Bekanntmachung des Hinweises auf die Patenterteilung: **06.05.2020**
(21) Anmeldenummer: 15781573.9
(22) Anmeldetag: 02.09.2015
(51) Int. Cl.: F16L 25/01, F16L 53/00, H01R 13/00, H05B 3/56

(54) **LEITUNGSVERBINDER SOWIE VERFAHREN ZUM VERSEHEN EINES FORMELEMENTFREIEN LEITUNGSVERBINDERS MIT ZUMINDEST EINER HEIZLITZE ODER EINEM HEIZDRAHT**
LINE CONNECTOR AND METHOD FOR PROVIDING A MOULDING ELEMENT FREE LINE CONNECTOR WITH AT LEAST ONE HEATING STRAND OR HEATING WIRE
RACCORD DE CONDUITES AINSI QUE PROCÉDÉ PERMETTANT DE MUNIR D'AU MOINS UN TORON CHAUFFANT OU UN FIL CHAUFFANT UN RACCORD DE CONDUITES SANS ÉLÉMENT MOULÉ

(30) Priorität: 03.09.2014 DE 102014012851
(43) Veröffentlichungstag der Anmeldung: 12.07.2017
(73) Patentinhaber: Voss Automotive GmbH, 51688 Wipperfürth (DE)
(72) Erfinder: ETSCHEID, Tobias, 51789 Lindlar (DE); SACHSE, Martin, 51688 Wipperfürth (DE); SCHWARZKOPF, Otfried, 51515 Kürten (DE); SCHÜLER, Thomas, 51643 Gummersbach (DE)
(74) Vertreter: Rebbereh, Cornelia
(86) Internationale Anmeldenummer: PCT/EP2015/001766
(87) Internationale Veröffentlichungsnummer: WO 2016/034284

(56) Entgegenhaltungen:
- EP-A1- 0 028 153
- EP-A1- 1 985 908
- EP-A2- 1 478 211
- DE-A1-102004 057 557
- DE-U1-202014 103 393

## Beschreibung

Die Erfindung betrifft einen Leitungsverbinder mit zumindest einem ersten Anschlussabschnitt zum Verbinden mit zumindest einer ersten Medienleitung, zumindest einem zweiten Anschlussabschnitt zum Verbinden mit zumindest einer zweiten Medienleitung und/oder einem Aggregat und zumindest einem die Anschlussabschnitte miteinander verbindenden und zwischen diesen angeordneten mittleren Abschnitt, wobei der Leitungsverbinder als Kunststoff-Formteil ausgebildet ist und zumindest eine Wandung und zumindest einen von dieser umgebenen inneren Strömungskanal aufweist und wobei der Leitungsverbinder in zumindest einem Teilbereich des mittleren Abschnitts mit zumindest einer Heizlitze oder einem Heizdraht zum elektrischen Beheizen durch Bewickeln versehen ist, wobei die Heizlitze oder der Heizdraht zumindest eine Litze oder zumindest einen Draht und eine diese oder diesen umgebende Isolationsummantelung aufweist. Die Erfindung betrifft ferner ein Verfahren zum Versehen eines formelementfreien Leitungsverbinders mit zumindest einer Heizlitze oder einem Heizdraht und eine konfektionierte Medienleitung mit einer Medienleitung und zumindest einem Leitungsverbinder, wie er vorstehend genannt ist.

Derartige Leitungsverbinder sind im Stand der Technik bekannt. Diese dienen dazu, eine Medienleitung beispielswiese mit einer anderen Medienleitung oder einem Aggregat zu verbinden, wobei eine Steckverbindung vorgesehen sein kann, bei der ein erster Leitungsverbinder einen Steckerteil und ein zweiter Leitungsverbinder oder ein Aggregat einen Anschlussabschnitt in Form eines Kupplungsabschnitts aufweisen kann. Der Leitungsverbinder weist eine Wandung auf, die einen inneren Strömungskanal umgrenzt, durch den Medium strömen kann. Der Leitungsverbinder kann dementsprechend beispielsweise in einem Kraftfahrzeug eingebaut werden, um dort vorgesehene Medienleitungen oder zumindest eine Medienleitung mit zumindest einem Aggregat zu verbinden. Die Verbindung von Medienleitung und Leitungsverbinder erfolgt über den einen Anschlussabschnitt des Leitungsverbinders, wobei der Anschlussabschnitt beispielsweise als hohler, einen Strömungskanal aufweisender Schaft ausgebildet sein kann, in den die Medienleitung eingeschoben und dort durch eine Klebe- oder Schweißverbindung befestigt werden kann. Ferner kann der Anschlussabschnitt als Dornabschnitt zum Aufdornen beispielsweise von Schlauchleitungen ausgebildet sein.

Insbesondere in Fahrzeugen werden die mit Leitungsverbindern versehenen Medienleitungen von flüssigen gefriergefährdeten Medien durchströmt. Bei niedrigeren Temperaturen droht das durch die Medienleitung(en) und Leitungsverbinder strömende Medium einzufrieren, weswegen es ebenfalls bekannt ist, eine Beheizung nicht nur der Medienleitung(en), sondern auch der Leitungsverbinder vorzusehen. Unter gefriergefährdeten Medien werden hier Medien verstanden, die aufgrund eines relativ hohen Gefrierpunktes bereits bei recht hohen Umgebungstemperaturen zum Gefrieren neigen, wodurch die Funktionsfähigkeit beispielsweise eines Fahrzeuges beeinträchtigt oder sogar erheblich gestört werden kann. Ersichtlich ist dies insbesondere bei wasserführenden Medienleitungen ebenso wie bei Medienleitungen, die von einer wässrigen Harnstofflösung als Medium durchströmt werden, wie zum Beispiel AdBlue®, der Fall, die als NOₓ-Reaktionsadditiv für Dieselmotoren mit sogenannten SCR-Katalysatoren eingesetzt wird (SCR=Selective Catalytic Reduction).

Um ein Einfrieren des Mediums innerhalb der Medienleitung sowie Leitungsverbinder zu vermeiden bzw. ein Auftauen eines bereits eingefrorenen Mediums zu ermöglichen, weist nicht nur die Medienleitung, sondern auch der Leitungsverbinder zumindest eine Heizlitze oder zumindest einen Heizdraht zum elektrischen Beheizen auf. Diese ist insbesondere um den Leitungsverbinder herumgewickelt, wobei dies in Form einer beispielsweise schraubenförmigen Bewicklung oder auch einer mäandrierten Bewicklung erfolgen kann. Derartige Leitungsverbinder sind beispielsweise aus der EP 1 985 908 B1 oder auch der EP 2 137 449 B1 bekannt. Das Vorsehen von außenseitigen Rippen an dem Leitungsverbinder bzw. von abstehenden Formelementen, zwischen denen Heizdraht oder Heizlitze um den Leitungsverbinder herumgeführt angeordnet wird, führt dazu, dass sich die Baugröße des Leitungsverbinders im Vergleich zu einer Ausführungsvariante ohne derartige Rippenstruktur bzw. abstehende Formelemente und somit auch die Baugröße einer außenseitigen Kapselung, die den Leitungsverbinder zumindest teilweise umgibt, erhöht. Aufgrund eines erhöhten Materialbedarfs kann sich dies dementsprechend als nachteilig erweisen. Ferner ist es bekannt, Leitungsverbinder, die unbeheizt verwendet werden, vorzusehen, die dementsprechend keine außenseitige Rippenstruktur bzw. Formelemente benötigen, zwischen denen bzw. in der Heizdrähte oder Heizlitzen angeordnet werden können. Bei Vorsehen von Formelementen oder einer Rippenstruktur zum Befestigen bzw. Fixieren der Heizdrähte bzw. Heizlitzen auf der Außenseite der entsprechenden Leitungsverbinder ist ein hoher Aufwand im Hinblick auf Herstellung und Bevorraten derartiger unterschiedlicher Ausführungsvarianten von Leitungsverbindern und dementsprechend auch Kosten erforderlich. Um derartige zusätzliche Kosten einzusparen, wäre es wünschenswert, einen Leitungsverbinder vorzusehen, der universal eingesetzt werden kann, also für eine Beheizbarkeit und eine nicht erforderliche Beheizbarkeit geeignet ist, auf dem eine Heizlitze bzw. ein Heizdraht funktionssicher fixiert werden kann.

Aus der DE 20 2014 103 393 U1 ist ein Verbinder für den Anschluss einer Kraftfahrzeugrohrleitung für die Durchleitung eines fluiden Mediums bekannt, wobei der Verbinder zwei Anschlussenden aufweist, von denen ein Anschlussende für den Anschluss einer Rohrleitung vorgesehen ist. Zwischen den Anschlussenden erstreckt sich eine einen Innenkanal für die Durchleitung des fluiden Mediums umgebene Verbinderwandung, die elektrisch beheizbar ist. Ein elektrischer Heizdraht erstreckt sich über einen Teil des Umfangs der Verbinderwandung und ist adhäsiv an der Außenoberfläche der Verbinderwandung fixiert. Auf die Außenoberfläche des Verbinders ist eine den Heizdraht formschlüssig umgebene Verbinderummantelung, insbesondere in Form einer Umspritzung, aufgebracht. Der elektrische Heizdraht ist von einer Ummantelung aus thermoplastischem Kunststoff umgeben und wird mittels dieser auf die Außenoberfläche der Verbinderwandung aufgeschmolzen und dadurch dort adhäsiv fixiert.

Der vorliegenden Erfindung liegt nun die Aufgabe zugrunde, einen Leitungsverbinder zu schaffen, der mit außenseitiger Bewicklung mit zumindest einer Heizlitze bzw. zumindest einem Heizdraht verwendet werden kann, wobei Leitungsverbinder nach dem Stand der Technik eine außenseitige Rippenstruktur bzw. Formelemente zum Führen von Heizlitze bzw. Heizdraht auf der Außenseite des Leitungsverbinders aufweisen, und somit eine funktionssichere Fixierung des zumindest einen Heizdrahts bzw. der zumindest einen Heizlitze auf der Außenseite des Leitungsverbinders auch ohne solche Formelemente oder Rippenstruktur möglich ist und damit eine möglichst effektive und funktionssichere Beheizung des durch diesen hindurch strömenden Mediums.

Die Aufgabe wird für einen Leitungsverbinder nach dem Oberbegriff des Anspruchs 1 dadurch gelöst, dass der Schmelzpunkt oder Schmelzbereich des für die innere Schicht der Isolationsummantelung der Heizlitze oder des Heizdrahts verwendeten Materials größer als der Schmelzpunkt oder Schmelzbereich des für die äußere Schicht verwendeten Materials ist.

Die Aufgabe wird ebenfalls durch eine konfektionierte Medienleitung mit zumindest einer Medienleitung und zumindest einem endseitig an dieser angeordneten Leitungsverbinder gelöst. Für ein Verfahren nach dem Oberbegriff des Anspruchs 15 wird die Aufgabe dadurch gelöst, dass die Heizlitzen- oder Heizdraht-Bewicklung durch zumindest eine Halteeinrichtung lagefixiert wird, eine Adhäsivverbindung von Heizlitze oder Heizdraht und Leitungsverbinder aktiviert wird, und die Halteeinrichtung nach dem haftenden Verbinden der Heizlitze oder des Heizdrahts mit dem Leitungsverbinder gelöst wird. Weiterbildungen der Erfindung sind in den abhängigen Ansprüchen definiert.

Dadurch wird ein Leitungsverbinder geschaffen, bei dem es möglich ist, ein und dieselbe Ausführungsvariante des Leitungsverbinders zum Ausbilden eines beheizbaren und eines nicht beheizbaren Leitungsverbinders zu verwenden. Die Außenseite des Leitungsverbinders kann somit frei von jeglichem Formelement, über das ansonsten eine Fixierung der zumindest einen Heizlitze oder des zumindest einen Heizdrahtes auf der Außenseite des Leitungsverbinders möglich wäre, ausgebildet werden. Der Leitungsverbinder kann ohne Heizlitze bzw. Heizdraht als sogenannter nicht beheizbarer Leitungsverbinder Verwendung finden, beispielsweise in einem Bereich eines Kraftfahrzeugs angeordnet werden, der im Betrieb des Fahrzeugs ausreichend temperiert ist, wie beispielsweise im Motorraum oder im Bereich einer Dosiereinheit eines Fahrzeugmotors. Ferner kann durch adhäsive Fixierung oder Befestigung die zumindest eine Heizlitze oder der zumindest eine Heizdraht auf der Außenseite des Leitungsverbinders fixiert bzw. befestigt werden, wodurch eine Beheizbarkeit des Leitungsverbinders vorgesehen wird. Eine solche kann insbesondere in einem im Betrieb eines Fahrzeugs nicht fremdbeheizten, insbesondere durch Fahrzeugkomponenten beheizten Bereich eines Fahrzeugs vorgesehen werden, in dem ansonsten bei niedrigen Außentemperaturen ein Einfrieren des durch die Medienleitung mit Leitungsverbinder strömenden Mediums zu befürchten steht, wie beispielsweise im Bereich eines Fahrzeugstanks bzw. einer Pumpe, die mit dem Fahrzeugtank verbunden ist. Insbesondere der mittlere Abschnitt des Leitungsverbinders kann dabei mit der zumindest einen Heizlitze bzw. dem zumindest einen Heizdraht versehen sein, wobei Heizlitze bzw. Heizdraht durch gewendeltes und/oder mäandriertes Bewickeln auf der Außenseite zumindest des mittleren Abschnitts des Leitungsverbinders aufgebracht sein kann.

Um zu vermeiden, dass beim adhäsiven Befestigen oder Fixieren der zumindest einen Heizlitze bzw. des zumindest einen Heizdrahts auf der Außenseite des Leitungsverbinders die mehrschichtige Isolationsummantelung aufschmilzt und dabei zumindest Teile der zumindest einen Litze oder des zumindest einen Drahts von Heizlitze bzw. Heizdraht freiliegen, somit die Isolationsummantelung von Heizlitze bzw. Heizdraht beschädigt wird, die freien Enden von Heizlitze bzw. Heizdraht verunreinigt oder verklebt werden, wobei die freien Enden von Heizlitze bzw. Heizdraht für die Kontaktierung desselben frei von Isolationsmaterial sein sollen, wird eine solche Art einer adhäsiven Fixierung bzw. Befestigung vorgesehen, durch die auch nach dem adhäsiven Fixieren oder Befestigen von Heizlitze bzw. Heizdraht auf dem Leitungsverbinder allseitig um die zumindest eine Litze oder den zumindest einen Draht von Heizlitze bzw. Heizdraht herum eine für eine elektrische Isolierung ausreichende Isolationsummantelungswandstärke verbleibt. Diese kann z.B. zumindest 0,12 mm betragen. Hierdurch kann sichergestellt werden, dass auch nach der adhäsiven Fixierung bzw. Befestigung von Heizlitze oder Heizdraht auf der Außenseite des Leitungsverbinders eine ausreichende Wandstärke der Isolationsummantelung verbleibt, um Heizlitze bzw. Heizdraht funktionssicher betreiben und dementsprechend den Leitungsverbinder sicher beheizen zu können. Würde die Isolationsummantelung der Heizlitze/des Heizdrahts lediglich aufgeschmolzen, könnte eine solche ausreichende elektrische Isolierung nicht sichergestellt werden.

Bei einer nicht erfindungsgemäßen einschichtigen Isolationsummantelung kann die Wandstärke, die nach dem adhäsiven Fixieren bzw. Befestigen allseitig um die zumindest eine Litze bzw. den zumindest einen Draht von Heizlitze bzw. Heizdraht herum verbleibt, 0,12 bis 0,4 mm betragen. Ist eine mehrschichtige Isolationsummantelung von Heizlitze oder Heizdraht vorgesehen, erweist es sich als vorteilhaft, die äußere Schicht der Isolationsummantelung auf dem Leitungsverbinder adhäsiv zu fixieren oder zu befestigen. Hierbei kann die äußere Schicht eine Wandstärke von 0,1 bis 0,4 mm aufweisen, während die innere Schicht der insbesondere zweischichtigen Isolationsummantelung mehr als 0,12 mm, insbesondere 0,12 bis 0,2 mm betragen kann.

Bei Vorsehen einer mehrschichtigen Isolationsummantelung von Heizlitze bzw. Heizdraht ist es möglich, die äußere Schicht aus einem anderen Material als die zumindest eine innere Schicht auszubilden, so dass beispielsweise bei Aufschmelzen der äußeren Schicht zum Verbinden derselben mit der Außenseite des Leitungsverbinders lediglich diese äußere Schicht aufschmilzt, nicht jedoch die darunter befindliche eine innere Schicht der Isolationsummantelung der Heizlitze bzw. des Heizdrahtes. Die zumindest eine innere Schicht verbleibt somit zum Ausüben einer Isolationswirkung auch bei vollständigem Aufschmelzen der äußeren Schicht der Isolationsummantelung von Heizlitze bzw. Heizdraht auf Litze bzw. Draht, so dass nicht die Gefahr einer Beschädigung der Isolationsummantelung von Heizlitze bzw. Heizdraht besteht.

Es kann ein partielles Anschmelzen der Isolationsummantelung der zumindest einen Heizlitze bzw. des zumindest einen Heizdrahts vorgesehen werden, so dass über die Länge von Heizlitze bzw. Heizdraht hinweg diese bzw. dieser lediglich partiell auf der Außenseite des Leitungsverbinders mit diesem verbunden bzw. an diesem fixiert wird. Eine solche punktuelle Verbindung kann beispielsweise auch durch punktuelles Schweißen erfolgen. Sowohl das partielle Anschmelzen als auch ein punktuelles Schweißen kann bei einer mehrschichtigen Isolationsummantelung von Heizlitze bzw. Heizdraht erfolgen. Hierdurch wird die Isolationsummantelung der Heizlitze bzw. des Heizdrahts nicht von der inneren Litze bzw. dem inneren Draht getrennt, so dass keine Beschädigung der Isolationswirkung zu befürchten ist.

Eine weitere Möglichkeit einer adhäsiven Fixierung oder Befestigung von Heizlitze oder Heizdraht auf der Außenseite des Leitungsverbinders besteht darin, dass ein Klebemittel zumindest partiell auf der Heizlitze oder dem Heizdraht oder auf der Außenseite des Leitungsverbinders an den Stellen, an denen Heizlitze bzw. Heizdraht aufgebracht werden soll, aufgebracht wird. Ferner ist es möglich, sowohl auf der Isolationsummantelung von Heizlitze bzw. Heizdraht als auch auf der Außenseite des Leitungsverbinders Klebemittel zum adhäsiven Verbinden von Heizlitze/Heizdraht und Leitungsverbinder aufzubringen. Auch ein vollflächiges Auftragen eines solchen Klebemittels insbesondere auf der Außenseite des Leitungsverbinders zum durchgängigen adhäsiven Verbinden von Heizlitze/Heizdraht und Leitungsverbinder ist möglich. Das Klebemittel kann dabei ohne weitere Aktivierung ein Verbinden von Heizlitze/Heizdraht und Leitungsverbinder ermöglichen. Ferner ist es möglich, eine Klebemittelaktivierung bzw. Adhäsionsaktivierung durch zumindest ein Hilfsmittel vorzusehen, wie beispielsweise ein Aufbringen von Wärme, Infrarotstrahlung, UV-Strahlung oder dem Wirkenlassen eines anderen Hilfsmittels. Eine Aktivierung über Wärme kann beispielsweise auch dadurch vorgesehen werden, dass ohnehin vorhandende Prozesswärme, die auf eine Medienleitung mit bereits daran angebrachtem Leitungsverbinder einwirkt, zum adhäsiven Verbinden von Heizlitze/Heizdraht und Leitungsverbinder genutzt wird. Beispielsweise wird eine solche Prozesswärme in Öfen zur Verfügung gestellt, in die eine mit Leitungsverbinder versehene Medienleitung zum Formbiegen eingebracht wird. Ferner ist es möglich, eine Wärmeerzeugung durch Induktion oder direktes Bestromen von Heizlitze bzw. Heizdraht vorzusehen, Heizlitze bzw. Heizdraht somit an eine elektrische Spannungsquelle anzuschließen und durch dieses Bestromen von Heizlitze/Heizdraht eine Adhäsionsaktivierung durchzuführen. Diese bewirkt eine feste Verbindung von Heizlitze/Heizdraht und Leitungsverbinder, so dass im späteren Betrieb einer konfektionierten Medienleitung mit Leitungsverbinder und Medienleitung und somit Bestromen der Heizlitze/des Heizdrahts diese(r) sich nicht ungewollt von dem Leitungsverbinder trennt.

Ferner ist es möglich, die Wärme zum Aktivieren der adhäsiven Verbindung von Isolationsummantelung von Heizlitze/Heizdraht und Außenseite des Leitungsverbinders im Rahmen eines Vorwärmprozesses zur Verfügung zu stellen, der für den Leitungsverbinder vorgesehen wird, wenn dieser mit einer Umspritzung oder einem Verguss zum außenseitigen Isolieren versehen wird. Noch eine weitere Möglichkeit einer Aktivierung eines adhäsiven Verbindens der Isolationsummantelung von Heizlitze bzw. Heizdraht und der Außenseite des Leitungsverbinders kann durch das Vorsehen eines Zweikomponentenklebemittels vorgesehen werden. Hierbei kann beispielsweise eine Komponente des Klebemittels auf der Außenseite des Leitungsverbinders aufgebracht werden und die andere auf der Außenseite der Isolationsummantelung der Heizlitze bzw. des Heizdrahts. Nachfolgend werden beide durch Inkontaktbringen verbunden.

Zum adhäsiven Fixieren der zumindest einen Heizlitze bzw. des zumindest einen Heizdrahtes auf der Außenseite des Leitungsverbinders kann ferner zumindest ein Fixierelement oder zumindest ein Fixierbereich dort vorgesehen sein. Insbesondere kann zumindest ein adhäsiv wirkendes Fixierelement oder ein adhäsiv wirkender Fixierbereich auf der Leitungsverbinder-Außenseite vorgesehen sein. Hierbei ist es somit möglich, ähnlich wie bei dem Vorsehen von Formelementen auf der Außenseite des Leitungsverbinders, an diesen Fixierelementen oder Fixierbereichen Heizlitze/Heizdraht adhäsiv zu befestigen und somit auf der Außenseite des Leitungsverbinders lagezufixieren. Das Vorsehen derartiger Fixierelemente oder zumindest eines Fixierbereichs auf der Außenseite des Leitungsverbinders zum Schaffen einer Beheizbarkeit über eine dort angeheftete Heizlitze bedeutet gegenüber dem Weglassen von diesem kaum einen Mehraufwand, so dass auf vergleichsweise einfache Art und Weise ein nicht beheizbarer Leitungsverbinder in einen beheizbaren Leitungsverbinder umgewandelt werden kann. Grundsätzlich ist es hierbei ebenfalls möglich, die zumindest eine Heizlitze bzw. den zumindest einen Heizdraht in die Oberfläche des Leitungsverbinders einzulassen, beispielsweise die Oberfläche dort, wo Heizlitze bzw. Heizdraht adhäsiv auf dem Leitungsverbinder befestigt werden soll, den Leitungsverbinder zu erwärmen und hierdurch ein Einlassen von Heizlitze/Heizdraht in die Oberfläche des Leitungsverbinders zu ermöglichen. Als besonders vorteilhaft erweist es sich in diesem Zusammenhang, wenn die Isolationsummantelung von Heizlitze/Heizdraht ebenso wie zumindest eine äußere Schicht des Leitungsverbinders aus einem thermoplastischen Material, insbesondere thermoplastischem Kunststoff, besteht. Das Vorsehen einer solchen Materialpaarung aus thermoplastischen Kunststoffen seitens des Leitungsverbinders und der Isolationsummantelung der zumindest einen Heizlitze/des zumindest einen Heizdrahts ermöglicht ferner ein auch nur punktuelles Aufschmelzen von Isolationsummantelung und dem jeweiligen Teilbereich der Außenseite des Leitungsverbinders, auf dem die Heizlitze/der Heizdraht adhäsiv fixiert bzw. befestigt werden soll.

Ferner kann zumindest eine Fixierstelle als Umlenkstelle für die zumindest eine Heizlitze bzw. den zumindest einen Heizdraht auf der Außenseite des Leitungsverbinders vorgesehen werden. Außer der zumindest einen Fixierstelle als Umlenkstelle für Heizlitze bzw. Heizdraht können zusätzlich beispielsweise zwei weitere Fixierstellen zum Fixieren der Position der zumindest zwei Heizlitzenenden bzw. Heizdrahtenden auf der Außenseite des Leitungsverbinders vorgesehen werden. Weitere Fixierstellen sind dabei nicht erforderlich, können jedoch, sofern dies gewünscht wird, selbstverständlich vorgesehen werden. Es ist somit ausreichend, lediglich drei Fixierstellen auf der Außenseite des Leitungsverbinders zum adhäsiven Fixieren von Heizlitze bzw. Heizdraht dort vorzusehen. Zwischen der Umlenkstelle und den beiden anderen Fixierstellen kann die Heizlitze bzw. der Heizdraht in beliebig vielen Windungen und/oder Mäandern auf der Außenseite des Leitungsverbinders angeordnet werden. Hierbei kann auch eine beliebige Länge an Heizlitze bzw. Heizdraht dort angeordnet werden. Insbesondere können sich berührende Windungen, somit ein Abstand zwischen den Windungen von weniger als 1 mm vorgesehen werden.

Auf der Außenseite von Heizlitze/Heizdraht und Leitungsverbinder kann zum thermischen Isolieren eine außenseitige Kapselung durch Anordnen von entsprechenden Kapselungselementen, wie schalenförmigen Kapselungselementen, durch Vergießen oder Umspritzen, wie vorstehend bereits erwähnt, vorgesehen werden. Durch eine solche thermische Kapselung ist zugleich ein zusätzlicher äußerer Schutz auch für die Bewicklung des Leitungsverbinders mit der zumindest einen Heizlitze bzw. dem zumindest einen Heizdraht gegeben.

Zumindest der mit der Heizlitze oder dem Heizdraht zu bewickelnde oder bewickelte Teil der Außenseite des Leitungsverbinders kann mit zumindest einem adhäsiv wirkenden Material versehen werden, insbesondere mit diesem beschichtet oder mit diesem durch Aufschrumpfen versehen werden. Als Material eignet sich hier beispielsweise FEP, also Perfluorethylenpropylen. Insbesondere der mittlere Abschnitt des Leitungsverbinders kann dementsprechend auf seiner Außenseite mit einem solchen adhäsiv wirkenden Material versehen werden, auf das die zumindest eine Heizlitze bzw. der zumindest eine Heizdraht aufgewickelt wird. Die Heizlitze/der Heizdraht hält nachfolgend durch Adhäsionswirkung auf der Außenseite des dementsprechend mit dem adhäsiv wirkenden Material versehenen Leitungsverbinders haftend fest.

Zum Bewickeln eines ohne außenseitige Formelelemente, also formelementfrei, ausgerüsteten Leitungsverbinders mit der zumindest einen Heizlitze/dem zumindest einem Heizdraht und hierbei gezielten Anordnen von Heizlitze bzw. Heizdraht auf der Außenseite des Leitungsverbinders erweist es sich als vorteilhaft, zumindest eine Halteeinrichtung zu verwenden. Die Halteeinrichtung kann in Form eines Niederhalters vorgesehen werden, der nach dem Bewickeln des Leitungsverbinders mit der zumindest einen Heizlitze bzw. dem zumindest einem Heizdraht diese bzw. diesen bis zum Aktivieren der Adhäsion, insbesondere bis zum vollständigen Abschluss des Adhäsionsvorgangs, Heizlitze bzw. Heizdraht auf der Außenseite des Leitungsverbinders festhält. Ein ungewolltes Deplatzieren von Heizlitze bzw. Heizdraht auf der Außenseite des Leitungsverbinders kann dadurch verhindert werden. Dementsprechend ist auch ohne das Vorsehen von Formelementen auf der Außenseite des Leitungsverbinders, ein gezieltes Anordnen von Heizlitze bzw. Heizdraht auf der Außenseite des Leitungsverbinders möglich, ohne dass eine Lageveränderung bis zum endgültigen Halt der Heizlitze bzw. des Heizdrahtes auf der Außenseite des Leitungsverbinders zu befürchten ist.

Wenngleich es grundsätzlich ausreichend ist, den Leitungsverbinder formelementfrei auszubilden, also auf dessen Außenseite keine Formelemente vorzusehen, die in Form von vorstehenden und/oder zurückspringenden Elementen vorgesehen werden können, und lediglich Heizlitze bzw. Heizdraht durch adhäsive Fixierung oder Befestigung dort anzuordnen, können grundsätzlich selbstverständlich vereinzelt oder auch über den gesamten Umfang des Leitungsverbinders hinweg zahlreiche Formelemente vorgesehen werden. Diese können in Form von herkömmlichen Formelementen ausgebildet werden, zwischen denen oder entlang von denen Heizlitze bzw. Heizdraht angeordnet werden kann oder aber in Form lediglich angedeuteter Formelemente, die beispielsweise in Form von Noppen oder sehr flachen Stegen oder noppenartigen Stellen auf der Außenseite des Leitungsverbinders ausgebildet sind. Diese können eine sehr viel geringere Höhe als dem Außendurchmesser von Heizlitze bzw. Heizdraht entspräche aufweisen. Eine Kombination einer adhäsiven Fixierung oder Befestigung von Heizlitze oder Heizdraht auf der Außenseite des Leitungsverbinders mit derartigen Formelementen ist ebenfalls möglich.

Die Heizlitzenlänge oder Heizdrahtlänge kann beispielsweise 140 bis 600 mm betragen, wobei die für die adhäsive Befestigung auf dem Leitungsverbinder vorgesehene Heizlitzenlänge oder Heizdrahtlänge 30 bis 580 mm und die zum Aufbringen auf der Medienleitung vorgesehene Heizlitzenlänge oder Heizdrahtlänge 10 bis 100 mm betragen kann. Hierbei ist es ferner möglich, den Umlenkungspunkt einer doppelt gelegten Heizlitze bzw. eines doppelt gelegten Heizdrahtes symmetrisch anzuordnen bezüglich der Heizlitzenlänge bzw. Heizdrahtlänge oder asymmetrisch, so dass unterschiedlich lange Heizlitzenabschnitte/Heizdrahtlängen zum Umwickeln des Leitungsverbinders und ggf. Verbinden mit einer Medienleitung zur Verfügung gestellt werden. Ebenfalls ist es hierbei möglich, die zum Verbinden mit der Medienleitung vorgesehenen Heizlitzenlängen bzw. Heizdrahtlängen an beiden Enden von Heizlitze/Heizdraht identisch oder im Wesentlichen identisch oder aber unterschiedlich auszubilden. Die jeweilige Wahl der Längen kann von der Art der Bewickelung des Leitungsverbinders und/oder der Medienleitung und auch von dem jeweiligen Anwendungsfall, somit auch der gewünschten Wärmeeinbringung in das Innere des Leitungsverbinders durch die Heizlitze bzw. den Heizdraht ausgewählt werden. Die für die adhäsive Befestigung auf dem Leitungsverbinder vorgesehene Heizlitzenlänge/Heizdrahtlänge kann vollständig adhäsiv auf der Außenseite des Leitungsverbinders befestigt werden oder lediglich an einzelnen Fixierstellen, wie vorstehend bereits erwähnt, beispielsweise im Bereich der Umlenkstelle und an den Übergangsstellen zu den Heizlitzenenden/Heizdrahtenden, die für das Verbinden mit der Medienleitung, die ihrerseits mit dem Leitungsverbinder verbunden wird, vorgesehen sind.

Der erste Anschlussabschnitt des Leitungsverbinders kann beispielsweise als hohler, Strömungskanal aufweisender Schaft ausgebildet und ebenfalls mit der Heizlitze oder dem Heizdraht außenseitig gezielt bewickelt sein oder werden. Durch das gezielte außenseitige Bewickeln des Schaftbereichs des Leitungsverbinders, also des als hohler, einen Strömungskanal aufweisender Schaft ausgebildeten ersten Anschlussabschnitts von diesem, ist es möglich, auch den für die Befestigung der Medienleitung vorgesehenen Anschlussabschnitt beheizbar zu gestalten. Die Medienleitung kann dort stoffschlüssig befestigt werden, wobei sich ein Laserschweißen weniger gut eignet, da die Heizlitze bzw. das Heizelement, das auf den Schaftbereich des Leitungsverbinders aufgewickelt ist, einen Laservorschweißvorgang stören kann. Allerdings eignet sich insbesondere ein Reibschweißen oder ein anderes stoffschlüssiges Verfahren zum Verbinden von Medienleitung und erstem Anschlussabschnitt des Leitungsverbinders.

Vorteilhaft bestehen zumindest der Teil der Außenseite des Leitungsverbinders, auf dem die Heizlitze oder der Heizdraht fixiert ist oder wird, und zumindest die äußerste Schicht der Isolationsummantelung der Heizlitze oder des Heizdrahts aus einem thermoplastischen Material, insbesondere Kunststoff. Beispielsweise kann die Wandung des Leitungsverbinders aus einem Polyamid oder Polyphthalamid und die äußerste Schicht der Isolationsummantelung der Heizlitze. oder des Heizdrahts aus TPE oder thermoplastischem Polyesterelastomer/thermoplastischem Copolyester mit Polyester-Weichsegmenten (TPC-ES) bestehen. Die Isolationsummantelung der Heizlitze oder des Heizdrahts kann bei einer zweischichtigen Ausbildung eine innere Schicht aus Polytetrafluorethylen (PTFE) und eine äußere Schicht aus Perfluorethylenpropylen (FEP) umfassen.

Als weiter vorteilhaft erweist es sich, wenn der Schmelzpunkt oder der Schmelzbereich des für die Innenschicht der Isolationsummantelung der Heizlitze oder des Heizdrahts verwendeten Materials größer als der Schmelzpunkt oder Schmelzbereich des für die Außenschicht verwendeten Materials ist. Insbesondere kann der Schmelzpunkt oder der Schmelzbereich des Materials der Innenschicht mehr als 140 °C und der Schmelzpunkt oder Schmelzbereich des Materials der Außenschicht 120 bis 230 °C betragen. Materialien, die sich für die Innenschicht eignen, sind beispielsweise Ethylentetrafluorethylen (ETFE), FEP, Polyvinylidenfluorid (PVDF), Perfluoralkoxylalkan (PFA) sowie das bereits genannte PTFE. Materialien, deren Schmelzpunkt oder Schmelzbereich geringer als das der vorstehend genannten Materialien ist, sind beispielsweise Fluorpolymere, wie zum Beispiel thermoplastisches Polyesterelastomer/thermoplastisches Copolyester (TPC bzw. TPE-E), PVC, Polybutylenterephthalat (PBT), sowie thermoplastische Elastomere auf Urethanbasis (TPU bzw. TPE-U), wobei bei letzterem Werkstoff ein Schmelzbereich anstelle eines Schmelzpunktes vorliegt. Als weiter vorteilhaft erweist es sich, wenn die Schmelztemperatur des Materials oder der Materialien der ein- oder mehrschichtigen äußeren Schicht der Isolationsummantelung der Heizlitze bzw. des Heizdrahts oberhalb der Dauer-Betriebstemperatur liegt, der der Leitungsverbinder im Betrieb ausgesetzt ist. Eine solche Dauer-Betriebstemperatur kann bei einer Beaufschlagung mit 160 °C bei 1.000 Stunden, bei einer Beaufschlagung mit 120 °C unbegrenzt, bei einer Beaufschlagung mit 180 °C bei 10 Stunden sowie bei einer Beaufschlagung mit 150 °C bei 3.000 Stunden liegen. Die Schmelztemperatur der jeweiligen gewählten äußeren Schicht der Isolationsummantelung der Heizlitze bzw. des Heizdrahts liegt dementsprechend oberhalb der jeweils genannten Temperaturen.

Der als Kunststoff-Formteil ausgebildete Leitungsverbinder besteht vorteilhaft aus thermoplastischem Kunststoff, wie bereits erwähnt, vorzugsweise aus einem Polyamid, wie beispielsweise PA12, PA11, oder auch einem Polyphthalamid (PPA). Für das stoffschlüssige Verbinden des einen Anschlussabschnitts des Leitungsverbinders mit einer Medienleitung wird vorteilhaft ein lasertransparentes Material verwendet, um eine Laserschweißung zum Befestigen der Medienleitung auf dem hohlen, einen Strömungskanal aufweisenden Schaft, also ersten Anschlussabschnitt, des Leitungsverbinders zu ermöglichen. Insbesondere kann nur der Anschlussabschnitt aus einem lasertransparenten Material bestehen. PPA wird bei Schmelztemperaturen oberhalb von 140 °C für den Leitungsverbinder bevorzugt.

Die Heizlitze bzw. der Heizdraht können, wie bereits erwähnt, unterschiedliche Längen aufweisen, wobei es hierdurch möglich ist, nicht nur eine unterschiedliche Heizlitzenlänge bzw. Heizdrahtlänge auf der Außenseite des Leitungsverbinders aufzubringen, sondern auch direkt zum Bewickeln der Medienleitung mit zu verwenden, so dass auch diese durch dieselbe Heizlitze beheizbar ist. Dementsprechend können unterschiedliche Varianten von konfektionierten Medienleitungen mit zumindest einem endseitig an die Medienleitung angeschlossenen Leitungsverbinder vorgesehen werden, die beheizbar sind. Beispielsweise können zwei endseitig an einer Medienleitung angeschlossene Leitungsverbinder über separate Heizlitzen bzw. Heizdrähte beheizt werden, während sich auch entlang der Medienleitung zwei Heizlitzen bzw. Heizdrähte erstrecken. Ferner kann lediglich ein Leitungsverbinder mit einer separaten Heizlitze bzw. einem separaten Heizdraht versehen sein und die Medienleitung eine zweite Heizlitze bzw. einen zweiten Heizdraht aufweisen, somit zwei Heizlitzen bzw. Heizdrähte sich entlang der konfektionierten Medienleitung erstrecken. Selbstverständlich können hier auch beliebige andere Varianten vorgesehen werden, wobei die außenseitige Befestigung von Heizlitze bzw. Heizdraht auf dem Leitungsverbinder adhäsiv erfolgen kann, ggf. ebenfalls die Befestigung oder Fixierung der Heizlitze bzw. des Heizdrahts auf der Außenseite der Medienleitung ebenfalls adhäsiv erfolgen kann.

Da beim adhäsiven Fixieren bzw. Befestigen der zumindest einen Heizlitze bzw. des zumindest einen Heizdrahtes auf der Außenseite des Leitungsverbinders darauf geachtet wird, dass auch nach der adhäsiven Fixierung/Befestigung eine ausreichende Menge an Isolationsummantelung allseitig umfänglich die innere Litze bzw. den inneren Draht der Heizlitze/des Heizdrahts umgibt, können Litze bzw. Draht stets ausreichend geschützt werden. Würde beispielsweise lediglich ein Aufschmelzen der Isolationsummantelung von Heizlitze bzw. Heizdraht zum adhäsiven Befestigen derselben bzw. desselben auf der Außenseite des Leitungsverbinders vorgesehen werden, könnte die innere Litze bzw. der innere Draht ungewollt vollständig freigelegt werden, was zu einem unzureichenden Schutz von dieser führen würde. Ferner wäre es danach auch möglich, dass bei weiterem Umspritzen des Leitungsverbinders zum thermischen Isolieren desselben zwischen der freigelegten Litze bzw. dem freigelegten Draht von Heizlitze/Heizdraht und der Umspritzung durch Kapillarwirkung Feuchtigkeit eindringt, die zu einem Zerstören der Heizlitze bzw. des Heizdrahts führen kann. Dadurch, dass eben gerade nicht eine aus einem thermoplastischen Kunststoffmaterial bestehende Isolationsummantelung der Heizlitze/des Heizdrahts lediglich aufgeschmolzen wird, sondern eine andere Form einer adhäsiven Fixierung bzw. Befestigung der Heizlitze/des Heizdrahts auf der Außenseite des Leitungsverbinders unter Zuhilfenahme zumindest eines Hilfsmittels/adhäsiven Befestigungshilfsmittels vorliegend vorgesehen wird, ist jederzeit eine Kontaktierbarkeit der Heizlitze/des Heizdrahts gegeben. Ein ungewolltes Verunreinigen der Isolationsummantelung der Heizlitze durch Mittel, die die Adhäsion herbeiführen sollen, wie Klebemittel oder angeschmolzenes thermoplastisches Kunststoffmaterial, wird vorliegend vermieden.

Zur näheren Erläuterung der Erfindung werden im Folgenden Ausführungsbeispiele von dieser näher anhand der Zeichnungen beschrieben. Diese zeigen in:
- Figur 1: eine Seitenansicht eines erfindungsgemäßen Leitungsverbinders mit angedeuteter außenseitiger Kapselung und mit adhäsiver Befestigung der Heizlitze,
- Figur 2: eine Seitenansicht einer zweiten Ausführungsform eines erfindungsgemäßen Leitungsverbinders mit außenseitiger Kapselung und mit adhäsiver Fixierung der Heizlitze an drei Stellen,
- Figur 3: eine Seitenansicht einer dritten Ausführungsform eines erfindungsgemäßen Leitungsverbinders, bei dem eine haftende Materialschicht auf einen mittleren Abschnitt des Leitungsverbinders zum adhäsiven Befestigen der Heizlitze aufgebracht ist,
- Figur 4, 4a und Figur 5: Seitenansichten eines Leitungsverbinders, wobei in Figur 4 ein erster Schritt einer Bewicklung von diesem mit einer nicht erfindungsgemäßen einschichtigen Heizlitze, in Figur 4a ein Detailausschnitt des Heizlitzenendes und in Figur 5 ein zweiter Schritt unter Verwendung einer Niederhaltevorrichtung zum Fixieren der Position der Bewicklung des Leitungsverbinders mit der Heizlitze angedeutet ist,
- Figur 6: eine Seitenansicht eines erfindungsgemäßen Leitungsverbinders mit einem außenseitig angeordneten Formelement als Umlenkpunkt für eine Heizlitze,
- Figur 7: eine Seitenansicht des Leitungsverbinders gemäß Figur 6 mit darauf aufgewickelter Heizlitze,
- Figur 8: eine Seitenansicht einer Heizlitze,
- Figur 9: eine Querschnittsansicht einer Ausführungsform einer erfindungsgemäßen Heizlitze,
- Figur 10: eine Querschnittsansicht einer zweiten Ausführungsform einer erfindungsgemäßen Heizlitze,
- Figur 11: eine Seitenansicht einer weiteren Ausführungsform eines erfindungsgemäßen Leitungsverbinders mit darauf aufgewickelter Heizlitze, die sich auch mit der Bewicklung über einen Schaftbereich des Leitungsverbinders erstreckt,
- Figur 12: eine schematische Ansicht einer konfektionierten Medienleitung, umfassend zwei Leitungsverbinder mit dazwischen angeordneter Medienleitung und vier Heizlitzen,
- Figur 13: eine Prinzipskizze einer konfektionierten Medienleitung mit einem endseitig angeordneten Leitungsverbinder und einer sich über diesem erstreckenden Heizlitze, und
- Figur 14: eine Prinzipskizze einer konfektionierten Medienleitung mit erfindungsgemäßem Leitungsverbinder, dessen Heizlitze sich auch über einen Teil der Medienleitung erstreckt.

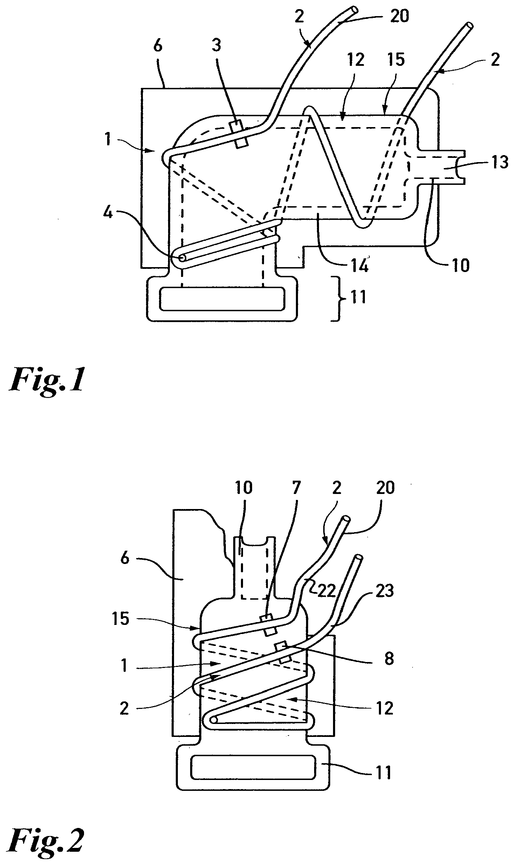

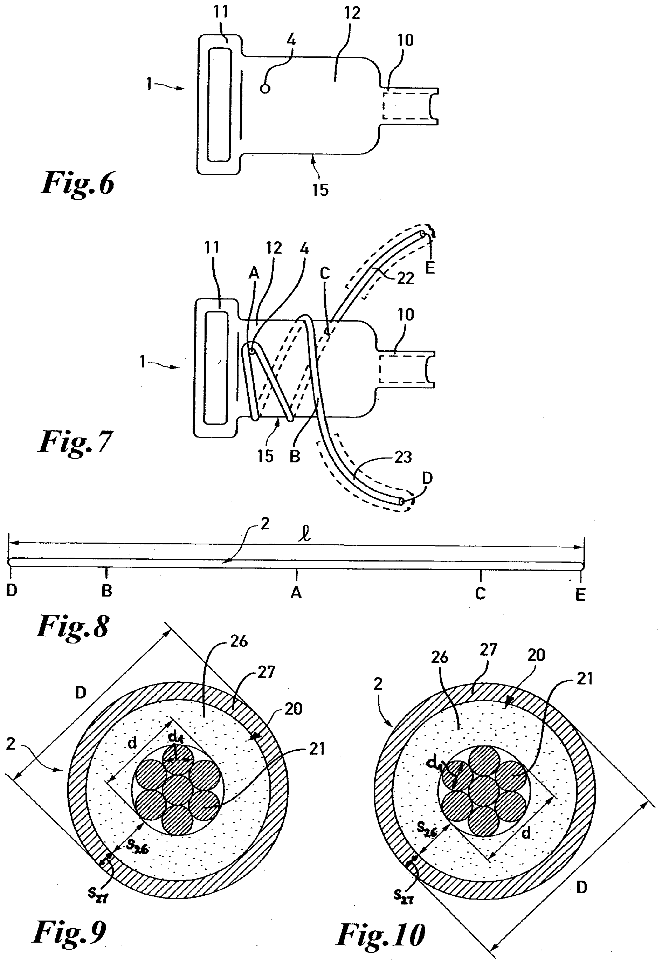

Figur 1 zeigt eine Seitenansicht eines Leitungsverbinders 1, umfassend einen ersten schaftartigen Anschlussabschnitt 10 und einen zweiten Anschlussabschnitt 11, der als Kupplungsabschnitt ausgebildet ist. Zwischen den beiden Anschlussabschnitten 10, 11 erstreckt sich ein mittlerer Abschnitt 12. Dieser ist bei der in Figur 1 gezeigten Ausführungsvariante eines winkeligen Leitungsverbinders gewinkelt ausgebildet. Alle Abschnitte 10 bis 12 des Leitungsverbinders weisen einen inneren Strömungskanal 13 auf, der in Figur 1 lediglich angedeutet ist, durch den Medium strömen kann. Der innere Strömungskanal 13 wird von einer äußeren Wandung 14 des Leitungsverbinders begrenzt. Auf der Außenseite 15 der Wandung 14 ist der Leitungsverbinder 1 von einer Heizlitze 2 teilweise umgeben, die dort durch Bewickeln aufgebracht ist. Erkennbar ist die Heizlitze 2 mit unterschiedlichen Wickelabständen der einzelnen Windungen um den Leitungsverbinder in dessen mittlerem Abschnitt 12 herumgewickelt. Die Art der Bewicklung, die auch mäandriert erfolgen kann, wird vorteilhaft davon abhängig gemacht, wie viel Wärme in das Innere des Leitungsverbinders, also in das dort hindurchströmende Medium, eingebracht werden soll. Beispielsweise kann die Bewicklung auch in engen Windungen erfolgen, wobei diese einen Abstand von weniger als 1 mm aufweisen können. Ggf. können sich die einzelnen Windungen der Heizlitze 2 berühren. Dies führt nicht zu einem Kurzschluss, da die Heizlitze allseitig von einer Isolationsummantelung 20 umgeben ist, wie insbesondere den Figuren 9 und 10, in denen zwei Ausführungsvarianten der Heizlitze 2 angedeutet sind, entnommen werden kann.

Die Heizlitze 2 ist mit ihrer Isolationsummantelung 20 adhäsiv auf der Außenseite 15 des mittleren Abschnitts 12 fixiert bzw. befestigt. Die adhäsive Fixierung erfolgt in einem Fixierbereich 3. Umgelenkt wird die Heizlitze 2 an einer Umlenkstelle 4, die insbesondere in Form eines Formelementes, das aus der Oberfläche des mittleren Abschnitts 12 im Bereich des zweiten Anschlussabschnitts 11 herausragt, ausgebildet ist. Die Umlenkstelle 4 kann vorteilhaft in Form einer adhäsiven Befestigung der Heizlitze an dieser Stelle vorgesehen werden. Anstelle lediglich eines kurzen Fixierbereichs 3, wie in Figur 1 angedeutet, kann auch ein längerer Fixierbereich sich beispielsweise entlang der Heizlitze 2 auf der Außenseite 15 des Leitungsverbinders erstrecken. Zum adhäsiven Befestigen bzw. Fixieren der Heizlitze auf der Außenseite 15 des Leitungsverbinders 1 werden in jedem Falle Mittel verwendet, die zu keiner Beschädigung der Isolationsummantelung 20 der Heizlitze 2 führen, sondern vielmehr auch nach der adhäsiven Befestigung der Heizlitze auf der Außenseite des Leitungsverbinders eine ausreichend dicke Isolationsummantelung auf den innenliegenden Litzen 21 der Heizlitze 2 belassen.

Wie in Figur 1 angedeutet, wird in erster Linie lediglich stellenweise eine Fixierung der Heizlitze 2 auf der Außenseite 15 des Leitungsverbinders vorgesehen. Der Fixierbereich 3 kann dementsprechend ein Klebematerial sein, das zum adhäsiven Befestigen der Heizlitze auf der Außenseite 15 des Leitungsverbinders dient. Gerade bei mehrschichtigem Ausbilden der Isolationsummantelung 20 der Heizlitze 2 kann der Fixierbereich 3 auch durch partielles Anschmelzen der äußersten Schicht der Isolationsummantelung 20 der Heizlitze 2 erzeugt werden. Ebenfalls ist hier ein punktuelles Schweißen möglich. Selbstverständlich kann auch entlang der Heizlitze 2 bzw. von deren Isolationsummantelung 20 ein anderes Klebemittel aufgetragen werden, ggf. auch nur partiell, das zum adhäsiven Verbinden von Heizlitze 2 und Leitungsverbinder 1 dient. Ebenfalls kann ein Klebemittel auf der Außenseite 15 des Leitungsverbinders 1 aufgetragen und die Heizlitze 2 darauf adhäsiv befestigt werden. In jedem der Fälle ist einerseits eine Punktverklebung, andererseits eine durchgängige Verklebung von Heizlitze 2 und Leitungsverbinder 1 möglich. Auch können Mehrkomponentenkleber, insbesondere Zweikomponentenkleber verwendet werden, wobei eine Komponente auf die Außenseite 15 des Leitungsverbinder und die andere Komponente auf die Außenseite der Isolationsummantelung 20 der Heizlitze 2 aufgetragen und beide in Berührung miteinander gebracht werden. Eine Aktivierung eines wie auch immer ausgebildeten Klebemittels bzw. eine Adhäsionsaktivierung kann insbesondere durch Wärme, Infrarotstrahlung oder UV-Strahlung erfolgen. Eine Wärmeerzeugung ist insbesondere auch durch Induktion und direktes Bestromen der Heizlitze 2 möglich.

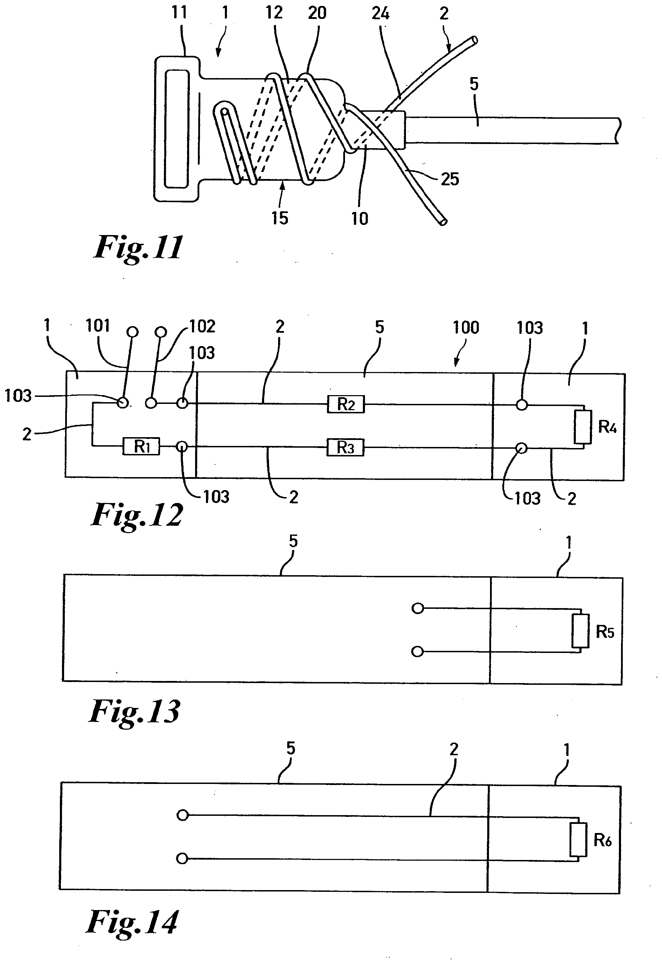

Wird eine mit dem Leitungsverbinder 1 verbundene Medienleitung 5, wie sie in Figur 11 angedeutet ist, formgebogen, um für die Verwendungsstelle beispielsweise in einem Fahrzeug passend geformt zu sein, kann beispielsweise die Prozesswärme, die zum Fixieren der Medienleitung verwendet wird, auch zum Aktivieren der Adhäsivverbindung zwischen Isolationsummantelung 20 der Heizlitze 2 und der Außenseite 15 des Leitungsverbinders 1 verwendet werden. Ferner ist es möglich, wie in Figur 1 und auch Figur 2 angedeutet, außenseitig um den Leitungsverbinder 1 herum eine Kapselung 6 vorzusehen, die der thermischen Isolierung des Leitungsverbinders dient und auch auf der Außenseite des Leitungsverbinders 1 aufgebrachte Heizlitze 2 nach außen schützt. Wird eine solche Kapselung 6 nicht in Form von Kapselungselementen, beispielsweise schalenförmigen Elementen, vorgesehen, sondern beispielsweise durch Vergießen oder Umspritzen, kann die hierbei vorgesehene Wärme bzw. das Vorwärmen ebenfalls zum Aktivieren der Adhäsivbefestigung der Heizlitze 2 auf dem Leitungsverbinder 1 genutzt werden.

Wie in Figur 2 zu sehen, ist es ausreichend, drei Fixierpunkte, einen ersten in Form einer Umlenkstelle 4 sowie zwei weitere Fixierpunkte 7,8 auf der Außenseite 15 des Leitungsverbinders 1 aufzubringen, um die Heizlitze 2 dort zu fixieren. Derartige Fixierpunkte sowie die Umlenkstelle 4 können grundsätzlich in Form von abstehenden oder in die Oberfläche des Leitungsverbinders eingelassenen Fixierelementen ausgebildet sein. Ebenfalls können sie als adhäsiv wirkende Fixierpunkte ausgebildet sein, an denen die Isolationsummantelung 20 der Heizlitze 2 auf der Außenseite 15 des Leitungsverbinders 1 fixiert wird. Bei der in Figur 2 gezeigten Ausführungsvariante dienen die Fixierpunkte 7,8 dazu, Heizlitzenenden 22,23 zu definieren, die frei von dem Leitungsverbinder abstehen und zum Verbinden mit der Medienleitung genutzt werden können. Zwischen der Umlenkstelle 4 und dem Fixierpunkt 7 bzw. der Umlenkstelle 4 und dem Fixierpunkt 8 kann eine unterschiedliche Litzenlänge und unterschiedliche Windungszahl der Heizlitze 2 angeordnet werden, wobei einerseits nicht nur unterschiedlich enge Windungen möglich sind, sondern auch selbstverständlich unterschiedliche Steigungen und Formgebungen der Wicklungen, die auch mäandriert vorgesehen werden können.

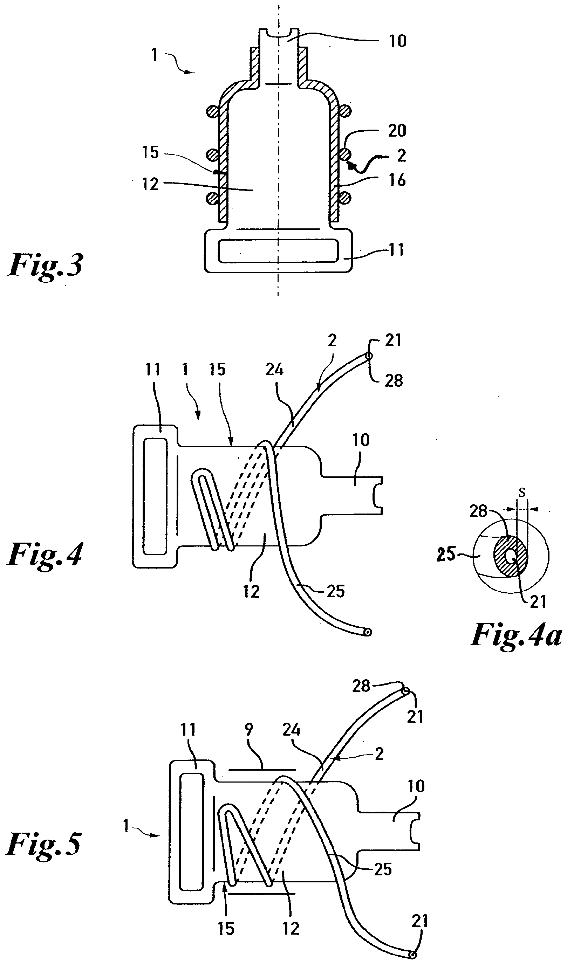

Figur 3 zeigt eine weitere Ausführungsvariante für eine adhäsive Befestigung der Heizlitze 2 auf der Außenseite 15 des Leitungsverbinders 1. Dieser ist zu diesem Zweck partiell mit einem adhäsiven Material 16 versehen. Dieses kann als Beschichtung oder als aufgeschrumpftes Material auf die Außenseite 15 des Leitungsverbinders aufgebracht werden. Beispielsweise eignet sich hier als Material FEP. In dem in Figur 3 gezeigten Ausführungsbeispiel erstreckt sich das adhäsive Material 16 über den mittleren Abschnitt 12 und einen Teil des ersten schaftartigen Anschlussabschnitts 10 hinweg. Außenseitig auf dem adhäsiven Material 16 ist die Bewicklung mit der Heizlitze 2 angeordnet, wobei deren Insolationsummantelung 20 auf dem adhäsiven Material 16 haftet.

Die Figuren 4 und 5 zeigen zwei Schritte des Anordnens der Heizlitze 2 auf der Außenseite des Leitungsverbinders 1, wenn keinerlei Formelemente zum Fixieren der Position der Heizlitzenbewicklung auf der Außenseite des Leitungsverbinders 1 vorgesehen sind. In dem in Figur 4 gezeigten ersten Schritt wird zunächst eine Bewicklung des mittleren Abschnitts 12 des Leitungsverbinders 1 mit der Heizlitze 2 vorgesehen, wobei diese um einen fiktiven Umlenkpunkt bzw. Umlenkstelle herum umgelenkt ist. Die Heizlitze ist also zweifach gelegt und wird mit ihren beiden Abschnitten 24,25 um die Außenseite 15 des Leitungsverbinders 1 herum gewickelt. Um die gewünschte Positionierung der Umwicklung mit den Heizlitzenabschnitten 24,25 auf der Außenseite des Leitungsverbinders 15 zu fixieren, ist in Figur 5 eine Niederhaltevorrichtung 9 angedeutet. Über dieser wird die Bewicklung des Leitungsverbinders 1 mit der Heizlitze 2 so lange fixiert, bis ein zwischen der Isolationsummantelung 20 der Heizlitze 2 und der Außenseite 15 des Leitungsverbinders 1 vorgesehenes Adhäsivmittel aktiviert und die Adhäsivverbindung abgeschlossen ist. Erst nach dem bleibenden Fixieren der Heizlitze 2 auf der Außenseite 15 des Leitungsverbinders 1 wird die Niederhaltevorrichtung 9 entfernt. Dies ist in Figur 5 allerdings nicht gezeigt.

Die Figuren 6 und 7 zeigen einen mit einer Umlenkstelle 4 in Form eines Formelementes versehenen Leitungsverbinder 1. In Figur 6 ist dieser ohne Bewicklung mit der Heizlitze 2 gezeigt, in Figur 7 mit dieser. Die Umlenkstelle 4 ist in Figur 7 mit dem A bezeichnet, zwei Stellen entlang der Heizlitze 2 sind mit B und C bezeichnet. Dies sind die Stellen, bis zu denen eine adhäsive Befestigung der Heizlitze 2 auf der Außenseite 15 des Leitungsverbinders 1 vorgesehen ist. Ab diesen Stellen B und C ist keine Befestigung der Heizlitzenenden 22,23 auf der Außenseite des Leitungsverbinders 1 mehr vorgesehen. Diese freien Heizlitzenenden 22,23 dienen dem Verbinden mit der Medienleitung 5, wie bereits vorstehend erwähnt. In Figur 8 ist die Heizlitze 2 lang gestreckt gezeigt und die Punkte A, B, C sowie die Enden D und E der Heizlitze 2 ebenfalls dort angezeichnet. Die Gesamtlänge der Heizlitze 2 kann I = 140 bis 600mm betragen. Die für die adhäsive Befestigung der Heizlitze 2 auf der Außenseite 15 des Leitungsverbinders 1 verwendete Heizlitzenlänge erstreckt sich von den Punkten B bis C und kann 30-580 mm betragen. Die freien Heizlitzenenden 22,23, die sich inzwischen den Punkten D und B bzw. C und E erstrecken, können 10 bis 100 mm betragen. Beispielsweise ist nicht nur eine durchgängige adhäsive Befestigung der Heizlitze 2 zwischen den Punkten B und C möglich, sondern auch lediglich eine stellenweise adhäsive Befestigung, beispielsweise durch Klebestellen an den Punkten B, A und C. Hierbei ist es möglich, die Abschnitte der Heizlitze 2 zwischen den Punkten B und A bzw. A und C gleichlang auszubilden, insbesondere den Punkt A (= Umlenkpunkt) mittig bezüglich der Längserstreckung der Heizlitze 2 anzuordnen. Ebenfalls ist es möglich, die Längen der Heizlitzen zwischen den Punkten B und A bzw. A und C ungleich auszubilden. Auch die Heizlitzenenden 22,23 können unterschiedlich lang oder gleichlang sein, somit die Heizlitzenabschnitte zwischen den Punkten D und B bzw. C und E.

Die Figuren 9 und 10 zeigen zwei Ausführungsvarianten der Heizlitze 2 im Querschnitt, wobei bei beiden Ausführungsvarianten eine zweischichtige Isolationsummantelung 20 vorgesehen ist. Diese weist jeweils eine innere Schicht 26 und eine äußere Schicht 27 auf. Im Inneren sind bei beiden Ausführungsvarianten sieben Litzen 21 der Heizlitze 2 angeordnet.

Die Litzen 21 der Heizlitzen 2 können bei der in Figur 9 gezeigten Ausführungsvariante beispielsweise einen Querschnittsbereich von zumindest 0,14 mm² bei einem Durchmesser d des die Litzen 24 umfassenden inneren Bereichs von 0,48 mm betragen, wobei der Durchmesser d₁ einer jeden Litze beispielsweise 0,16 mm betragen kann. Bei der in Figur 10 gezeigten Ausführungsvariante kann die Querschnittsfläche aller Litzen 21 beispielsweise maximal 0,37 mm² betragen, wobei der Durchmesser d₁ einer jeden Litze 21 beispielsweise 0,26 mm und dementsprechend der Durchmesser d des von den Litzen überdeckten Bereichs 0,78 mm betragen kann. Die Litzen 21 können beispielsweise aus Kupfer Cu, CuNi10, CuNi6, CuNi2, CuNi1 oder CuNi44, CuNi30, CuNi23, CuNi15 oder aber NiCr30 bestehen. Bei dem zweischichtigen Aufbau der Isolationsummantelung 20 der Heizlitze 2 kann die innere Schicht 26 beispielsweise aus PTFE und die äußere Schicht 27 aus FEP bestehen. Der Gesamtaußendurchmesser D der Heizlitze 2 kann beispielsweise 1,30 mm betragen. Wie der Vergleich der Figur 9 und 10 zeigt, kann insbesondere die Schichtdicke s₂₆ der inneren Schicht 26 variiert werden, wobei die Schichtdicke s₂₆ der inneren Schicht 26 von der Stärke der Haftung der beiden Schichten 26, 27 aufeinander abhängig gemacht werden kann. Bei einer guten Haftung der Schichten 26 und 27 aufeinander ist die Schichtdicke s₂₆ beliebig wählbar, bei einer schlechten Haftung der Materialien aufeinander beträgt diese vorteilhaft zumindest 0,16 mm, um eine gute Abisolierbarkeit der Heizlitze 2 zum Kontaktieren derselben vorzusehen. Die äußere Schicht 27 weist vorteilhaft eine konstante Schichtdicke s₂₇ auf. Die Schichtdicke der inneren Schicht 26 beträgt vorteilhaft zumindest s₂₆ = 0,12 mm, insbesondere s₂₆ > 0,12 mm bis 0,2 mm. Die Schichtdicke s₂₇ der äußeren Schicht 27 beträgt vorteilhaft 0,1 bis 0,4 mm. Hierdurch ist es möglich, dass auch nach dem adhäsiven Verbinden, ggf. unter teilweisem Aufschmelzen der äußeren Schicht 27 zum Befestigen auf dem Leitungsverbinder 1 eine ausreichend dicke Isolationsschicht bzw. Isolationsummantelung 20 über den Litzen 21 der Heizlitze 2 verbleibt. Bei einem nicht erfindungsgemäßen einschichtigen Isolationsummantelungsaufbau der Heizlitze 2, wie in Figur 4, 4a und 5 beispielhaft angedeutet, wobei nur eine Schicht 28 der Isolationsummantelung über den Litzen 21 vorgesehen ist, ergibt sich somit eine vorteilhafte Wandstärke s (siehe Figur 4a) von zumindest 0,12 mm, insbesondere 0,12 bis 0,4 mm.

Wie Figur entnommen werden kann, kann nicht nur eine Bewicklung des mittleren Abschnitts 12 des Leitungsverbinders 1 mit der Heizlitze 2 vorgesehen werden, sondern auch des schaftartigen ersten Anschlussabschnitts 10, um diesen ebenfalls über die Heizlitze 2 beheizen zu können. Wird eine solche Bewicklung des ersten schaftartigen Anschlussabschnitts 10 vorgesehen, eignet sich allerdings als stoffschlüssige Verbindung des Leitungsverbinders 1 mit der Medienleitung 5 kein Laserschweißen, da die Heizlitze 2 dieses behindert. Es kann jedoch beispielsweise eine Verbindung über Reibschweißen hier zum Verbinden von Medienleitung 5 und Leitungsverbinder 1 vorgesehen werden.

Die Figuren 12 bis 14 zeigen verschiedene Ausführungsvarianten von konfektionierten Medienleitungen 100, die bei der in Figur 12 gezeigten Ausführungsvariante die Medienleitung 5 mit endseitig daran angeordneten zwei Leitungsverbindern 1 zeigt, während die Ausführungsvariante nach Figur 13 die mit nur einem Leitungsverbinder 1 versehene Medienleitung 5 zeigt, ebenso wie die Ausführungsvariante nach Figur 14. Die drei Ausführungsvarianten von konfektionierten Medienleitungen 100 unterscheiden sich dadurch, dass eine unterschiedliche Anzahl von Heizlitzen 2 auf Leitungsverbinder 1 und Medienleitung 5 aufgebracht ist. Bei der in Figur 12 gezeigten Ausführungsvariante sind dies vier Heizlitzen 2, bei den Ausführungsvarianten nach Figur 13 und 14 lediglich eine Heizlitze 2. Die Heizlitzen 2 weisen jeweils einen Widerstand auf, wobei diese Widerstände mit R1, R2, R3, R4, R5 und R6 bezeichnet sind. Für den Fall, dass der jeweilige Leitungsverbinder 1, der endseitig an der Medienleitung 5 angeordnet ist, in heißer Umgebung, also in einem Heißbereich, angeordnet ist, wie beispielsweise angeschlossen an eine Dosierstelle eines Fahrzeugmotors, ist der Widerstand der Heizlitze 2 kleiner als der Widerstand der auf der Medienleitung 5 oder der Widerstand der auf dem anderen Leitungsverbinder angeordneten Heizlitze 2. Beispielsweise ist also der Widerstand R4 kleiner als der Widerstand R1 bzw. R2 bzw. R3. Die Widerstände R2, R3 der Heizlitzen 2, die auf der Medienleitung 5 angeordnet sind, können gleich groß oder ebenfalls unterschiedlich groß ausgebildet werden. Hier kann ein Unterschied auch dadurch geschaffen werden, dass die jeweilige Heizlitze 2 mit unterschiedlicher Steigung auf der Medienleitung aufgebracht wird. Im Bereich der Leitungsverbinder kann durch die Variation der Heizlitzenbefestigung auf diesem durch unterschiedliche adhäsive Befestigungsmittel und durch unterschiedliche Bewicklung ebenfalls ein unterschiedlich hoher Widerstand erzeugt werden, somit eine unterschiedliche Wärmemenge in das Innere, also den Strömungskanal und das darin strömende Medium, eingekoppelt werden. Wie Figur 12 weiter entnommen werden kann, ist die mit dem Widerstand R1 versehene Heizlitze 2 des Leitungsverbinders 1 mit zwei elektrischen Zuleitern 101, 102 verbunden, über die ein Anschluss an eine Energieversorgung (Strom- oder Spannungsquelle) ermöglicht wird. Derartige elektrische Zuleiter dienen nicht dem Beheizen und weisen dementsprechend auch einen geringeren Widerstand als die Heizlitze 2 auf.

Bei der in Figur 13 gezeigten Ausführungsvariante erstreckt sich die Heizlitze 2 mit dem Widerstand R5 lediglich über den Leitungsverbinder 1 hinweg, ähnlich wie bei der Ausführungsform nach Figur 11, Figur 7, Figur 1 oder Figur 2, und dient lediglich zum Beheizen des Leitungsverbinders. Die Medienleitung 5 kann mit einer weiteren Heizlitze 2 versehen sein oder auch mit zwei Heizlitzen 2, wobei dies in Figur 13 nicht gezeigt ist. Demgegenüber kann die zum Bewickeln des Leitungsverbinders 1 vorgesehene Heizlitze 2 nach Figur 14 auch zum zumindest teilweisen Beheizen der Medienleitung 5 bzw. des durch diese hindurch strömenden Mediums verwendet werden, so dass nach Figur 14 die Heizlitze 2 eine sehr viel größere Länge aufweist und dementsprechend einen anderen Widerstand R6 als die Heizlitze 2 mit dem Widerstand R5 nach Figur 13. Die einzelnen Heizlitzen 2 bzw. auch die Heizlitzen und die elektrischen Zuleiter 101, 102 können über sogenannte Crimpstellen 103 als Verbindungstellen miteinander verbunden werden.

Neben den im Vorstehenden beschriebenen und in den Ausführungsbeispielen genannten verschiedenen Ausführungsvarianten von Leitungsverbindern und Verfahren zum Aufbringen von Heizlitzen auf Leitungsverbindern, können noch zahlreiche weitere vorgesehen werden, auch beliebige Kombinationen von diesen, wobei jeweils die zumindest eine Heizlitze oder der zumindest eine Heizdraht zumindest in dem mittleren Abschnitt des Leitungsverbinders an diesem adhäsiv befestigt oder fixiert ist/wird, wobei die adhäsive Befestigung/Fixierung über ein adhäsives Befestigungsmittel erfolgt und wobei die Wandstärke der mehrschichtigen Isolationsummantelung der Heizlitze bzw. des Heizdrahts nach dem adhäsiven Fixieren/Befestigen auf dem Leitungsverbinder allseitig in einer für das Sicherstellen einer elektrischen Isolierung ausreichenden Dicke vorhanden ist. Insbesondere wird hierunter eine Restwandstärke der Isolationsummantelung von zumindest 0,12 mm verstanden.

### Bezugszeichenliste

- 1: Leitungsverbinder
- 2: Heizlitze
- 3: Fixierbereich
- 4: Umlenkstelle
- 5: Medienleitung
- 6: Kapselung
- 7: Fixierpunkt
- 8: Fixierpunkt
- 9: Niederhaltevorrichtung
- 10: erster Anschlussabschnitt (schaftartig)
- 11: zweiter Anschlussabschnitt (Kupplungsabschnitt)
- 12: mittlerer Abschnitt
- 13: innerer Strömungskanal
- 14: Wandung
- 15: Außenseite
- 16: adhäsives Material
- 20: Isolationsummantelung
- 21: Litze
- 22: Heizlitzenende
- 23: Heizlitzenende
- 24: Abschnitt
- 25: Abschnitt
- 26: innere Schicht
- 27: äußere Schicht
- 28: Schicht
- 100: konfektionierte Medienleitung
- 101: elektrischer Zuleiter
- 102: elektrischer Zuleiter
- 103: CrimpstelleNerbindungsstelle
- R1 - R6: Widerstände der Heizlitze 2
- I: Länge der Heizlitze 2
- d: Durchmesser innerer Bereich aller Litzen 21
- d₁: Durchmesser Litze 21
- D: Durchmesser Heizlitze 2
- S₂₆: Schichtdicke der inneren Schicht 26
- S₂₇: Schichtdicke der äußeren Schicht 27
- s: Schichtdicke von 28/Wandstärke der einschichtigen Isolationsummantelung

## Patentansprüche

1. Leitungsverbinder (1) mit zumindest einem ersten Anschlussabschnitt (10) zum Verbinden mit zumindest einer ersten Medienleitung (5), zumindest einem zweiten Anschlussabschnitt (11) zum Verbinden mit zumindest einer zweiten Medienleitung und/oder einem Aggregat und zumindest einem die Anschlussabschnitte (10,11) miteinander verbindenden und zwischen diesen angeordneten mittleren Abschnitt (12), wobei der Leitungsverbinder (1) als Kunststoff-Formteil ausgebildet ist und zumindest eine Wandung (14) und zumindest einen von dieser umgebenen inneren Strömungskanal (13) aufweist und wobei der Leitungsverbinder (1) in zumindest einem Teilbereich des mittleren Abschnitts (12) mit zumindest einer Heizlitze (2) oder einem Heizdraht zum elektrischen Beheizen durch Bewickeln versehen ist, wobei die Heizlitze (2) oder der Heizdraht zumindest eine Litze (21) oder zumindest einen Draht und eine diese oder diesen umgebende mehrschichtige Isolationsummantelung (20) aufweist, wobei
die zumindest eine Heizlitze (2) oder der zumindest eine Heizdraht zumindest in dem mittleren Abschnitt (12) des Leitungsverbinders (1) an diesem durch ein Befestigungsmittel adhäsiv fixiert oder befestigt ist, wobei die Wandstärke der mehrschichtigen Isolationsummantelung nach dem adhäsiven Fixieren oder Befestigen der Heizlitze (2) oder des Heizdrahts auf dem Leitungsverbinder (1) allseitig um die zumindest eine Litze (21) oder den zumindest einen Draht herum eine zum elektrischen Isolieren ausreichende Stärke aufweist, **dadurch gekennzeichnet, dass** der Schmelzpunkt oder
Schmelzbereich des für die innere Schicht (26) der Isolationsummantelung (20) der Heizlitze (2) oder des Heizdrahts verwendeten Materials größer als der Schmelzpunkt oder Schmelzbereich des für die äußere Schicht (27) verwendeten Materials ist.

2. Leitungsverbinder (1) nach Anspruch 1,
**dadurch gekennzeichnet, dass**
die Wandstärke der zweischichtigen Isolationsummantelung (20) nach dem adhäsiven Fixieren oder Befestigen allseitig um die zumindest eine Litze (21) oder den zumindest einen Draht herum zumindest 0,12 mm, insbesondere 0,12 bis 0,4 mm, beträgt.

3. Leitungsverbinder (1) nach Anspruch 1 oder 2,
**dadurch gekennzeichnet, dass**
eine äußere Schicht (27) der Isolationsummantelung (20) auf dem Leitungsverbinder (2) adhäsiv fixiert oder befestigt ist.

4. Leitungsverbinder (1) nach einem der vorstehenden Ansprüche,
**dadurch gekennzeichnet, dass**
zumindest ein Fixierelement oder zumindest ein Fixierbereich (3) zum adhäsiven Fixieren der Heizlitze oder des Heizdrahts auf der Außenseite (15) des Leitungsverbinders (1) vorgesehen ist und/oder dass zumindest ein adhäsiv wirkendes Fixierelement (7,8) oder ein adhäsiv wirkender Fixierbereich (3) auf der Leitungsverbinder-Außenseite (15) vorgesehen ist.

5. Leitungsverbinder (1) nach einem der vorstehenden Ansprüche.
**dadurch gekennzeichnet, dass**
zumindest eine Fixierstelle (4) als Umlenkstelle für die Heizlitze (2) oder den Heizdraht vorgesehen ist.

6. Leitungsverbinder (1) nach einem der Ansprüche 1 bis 3 oder 5,
**dadurch gekennzeichnet, dass**
zumindest der mit der Heizlitze (2) oder dem Heizdraht zu bewickelnde oder bewickelte Teil der Außenseite (15) des Leitungsverbinders (1) mit zumindest einem adhäsiv wirkenden Material (16) versehen, insbesondere beschichtet oder durch Aufschrumpfen versehen ist, wobei das Material insbesondere Perfluorethylenpropylen (FEP) ist.

7. Leitungsverbinder (1) nach einem der vorstehenden Ansprüche,
**dadurch gekennzeichnet, dass**
die Heizlitzenlänge (I) oder die Heizdrahtlänge 140 bis 600 mm beträgt, wobei die für die adhäsive Befestigung auf dem Leitungsverbinder (1) vorgesehene Heizlitzenlänge (B-C) oder Heizdrahtlänge 30 bis 580 mm beträgt und die zum Aufbringen auf der Medienleitung vorgesehene Heizlitzenlänge (22,23,D-B,C-E) oder Heizdrahtlänge 10 bis 100 mm beträgt.

8. Leitungsverbinder (1) nach einem der vorstehenden Ansprüche,
**dadurch gekennzeichnet, dass**
der erste Anschlussabschnitt (10) als hohler, einen Strömungskanal (13) aufweisender Schaft ausgebildet und mit Heizlitze (2) oder Heizdraht außenseitig gezielt bewickelt ist.

9. Leitungsverbinder (1) nach einem der vorstehenden Ansprüche,
**dadurch gekennzeichnet, dass**
die erste Medienleitung (5) an dem ersten Anschlussabschnitt (10) stoffschlüssig befestigt ist, insbesondere durch Laserschweißen oder Reibschweißen.

10. Leitungsverbinder (1) nach einem der vorstehenden Ansprüche,
**dadurch gekennzeichnet, dass**
der Leitungsverbinder (1) zumindest außenseitig aus einem thermoplastischen Material besteht, die zumindest eine Heizlitze (2) oder der zumindest eine Heizdraht eine mehrschichtige Isolationsummantelung (20) aus einem thermoplastischen Material aufweist, insbesondere die Isolationsummantelung (20) der Heizlitze (2) oder des Heizdrahts zweischichtig ist und eine innere Schicht (26) aus PTFE und eine äußere Schicht (27) aus FEP besteht.

11. Leitungsverbinder (1) nach einem der vorstehenden Ansprüche,
**dadurch gekennzeichnet, dass**
zumindest der Teil der Außenseite (15) des Leitungsverbinders (1), auf dem die Heizlitze (2) oder der Heizdraht fixiert ist oder wird, und zumindest die äußerste Schicht (27) der Isolationsummantelung (20) der Heizlitze (2) oder des Heizdrahts aus einem thermoplastischen Kunststoff bestehen, insbesondere die Wandung (14) des Leitungsverbinders (1) aus einem Polyamid oder Polyphthalamid und die äußerste Schicht (27) der Isolationsummantelung (20) der Heizlitze (2) oder des Heizdrahts aus TPE oder TPC-ES.

12. Leitungsverbinder (1) nach einem der vorstehenden Ansprüche,
**dadurch gekennzeichnet, dass**
die Schmelztemperatur des Materials oder der Materialien der ein- oder mehrschichtigen äußeren Schicht (27) oberhalb der Dauer-Betriebstemperatur liegt, der der Leitungsverbinder (1) im Betrieb ausgesetzt ist, insbesondere der Schmelzpunkt oder Schmelzbereich des Materials der inneren Schicht (26) mehr als 140 °C und der Schmelzpunkt oder Schmelzbereich des Materials der äußeren Schicht (27) 120 bis 230 °C beträgt.

13. Konfektionierte Medienleitung (100) mit zumindest einer Medienleitung (5) und zumindest einem endseitig an dieser angeordneten Leitungsverbinder (1) nach einem der vorstehenden Ansprüche.

14. Konfektionierte Medienleitung (100) nach Anspruch 13,
**dadurch gekennzeichnet, dass**
zumindest eine Heizlitze (2) oder zumindest ein Heizdraht vorgesehen ist, die oder der sich auf dem Leitungsverbinder (1) und entlang zumindest eines Abschnitts der Medienleitung (5) erstreckt oder dass zumindest eine Heizlitze (2) oder zumindest ein Heizdraht auf dem Leitungsverbinder (2) adhäsiv fixiert oder befestigt ist und zumindest eine Heizlitze (2) oder zumindest ein Heizdraht oder ein anderweitiges Heizelement zum Beheizen der Medienleitung (5) vorgesehen ist, insbesondere die zumindest eine Heizlitze (2) oder der zumindest eine Heizdraht außenseitig auf dem Leitungsverbinder (1) und auf der Medienleitung (5) adhäsiv fixiert oder befestigt ist oder die zumindest eine Heizlitze (1) oder der zumindest eine Heizdraht auf dem Leitungsverbinder (1) adhäsiv und auf der Medienleitung in anderer Form fixiert oder befestigt ist.

15. Verfahren zum Aufbringen zumindest einer Heizlitze (2) oder eines Heizdrahts auf einem formelementfreien Leitungsverbinder (1) nach einem der Ansprüche 1 bis 12,
wobei der Leitungsverbinder (1) in zumindest einem Teilbereich seiner Außenseite (15) mit der Heizlitze (2) oder dem Heizdraht bewickelt wird,
**dadurch gekennzeichnet, dass**
die Heizlitzen- oder Heizdraht-Bewicklung durch zumindest eine Halteeinrichtung (9) lagefixiert wird, eine Adhäsivverbindung von Heizlitze (2) oder Heizdraht und Leitungsverbinder (1) aktiviert wird, und die Halteeinrichtung (9) nach dem haftenden Verbinden der Heizlitze (2) oder des Heizdrahts mit dem Leitungsverbinder (1) gelöst wird.

## Claims

1. Conduit connector (1) with at least one first attachment section (10) for connecting to at least one first media conduit (5), with at least one second attachment section (11) for connecting to at least one second media conduit and/or to an aggregate, and with at least one central section (12)connecting the attachment sections (10, 11) to one another and arranged between the latter, wherein the conduit connector (1) takes the form of a moulding of synthetic material and exhibits at least one wall (14) and at least one inner flow duct (13) surrounded by said wall, and wherein the conduit connector (1) has been provided in at least one partial region of the central section (12) with at least one heating strand (2) or with a heating wire for electrical heating by wrapping, wherein the heating strand (2) or heating wire exhibits at least one stranded conductor (21) or at least one wire and a multi-layer insulating sheathing (20) surrounding said strand or wire,
wherein
the at least one heating strand (2) or the at least one heating wire has been adhesively fixed or fastened to the conduit connector, at least in the central section (12) of the conduit connector (1), by a fastening means, wherein the wall thickness of the multi-layer insulating sheathing after the adhesive fixing or fastening of the heating strand (2) or heating wire on the conduit connector (1) all around the at least one stranded conductor (21) or the at least one wire has a sufficient thickness for electrical insulation,
**characterized in that**
the melting-point or melting-range of the material being used for the inner layer (26) of the insulating sheathing (20) of the heating strand (2) or heating wire is higher than the melting-point or melting-range of the material being used for the outer layer (27).

2. Conduit connector (1) according to Claim 1,
**characterized in that**
the wall thickness of the two-layer insulating sheathing (20) after the adhesive fixing or fastening all around the at least one stranded conductor (21) or the at least one wire amounts to at least 0.12 mm, in particular 0.12 mm to 0.4 mm.

3. Conduit connector (1) according to Claim 1 or 2,
**characterized in that**
an outer layer (27) of the insulating sheathing (20) has been adhesively fixed or fastened on the conduit connector (2).

4. Conduit connector (1) according to one of the preceding claims,
**characterized in that**
at least one fixing element or at least one fixing region (3) has been provided on the outside (15) of the conduit connector (1) for adhesive fixing of the heating strand or heating wire, and/or **in that** at least one adhesively-acting fixing element (7, 8) or an adhesively-acting fixing region (3) has been provided on the outside (15) of the conduit connector.

5. Conduit connector (1) according to one of the preceding claims,
**characterized in that**
at least one fixing-point (4) has been provided as a rerouting-point for the heating strand (2) or heating wire.

6. Conduit connector (1) according to one of Claims 1 to 3 or 5,
**characterized in that**
at least the part of the outside (15) of the conduit connector (1) that is to be wrapped or has been wrapped with the heating strand (2) or heating wire has been provided with at least one adhesively-acting material (16), in particular has been coated therewith or has been provided therewith by shrink fitting, said material being, in particular, fluorinated ethylene propylene (FEP).

7. Conduit connector (1) according to one of the preceding claims,
**characterized in that**
the heating-strand length (1) or heating-wire length amounts to 140 mm to 600 mm, the heating-strand length (B-C) or heating-wire length provided for the adhesive fastening on the conduit connector (1) amounting to 30 mm to 580 mm, and the heating-strand length (22, 23, D-B, C-E) or heating-wire length provided for application on the media conduit amounting to 10 mm to 100 mm.

8. Conduit connector (1) according to one of the preceding claims,
**characterized in that**
the first attachment section (10) takes the form of a hollow shaft exhibiting a flow duct (13) and has been purposefully wrapped on the outside with the heating strand (2) or heating wire.

9. Conduit connector (1) according to one of the preceding claims,
**characterized in that**
the first media conduit (5) has been fastened to the first attachment section (10) by material closure, in particular by laser welding or friction welding.

10. Conduit connector (1) according to one of the preceding claims,
**characterized in that**
the conduit connector (1) consists, at least on the outside, of a thermoplastic material, the at least one heating strand (2) or the at least one heating wire exhibits a multi-layer insulating sheathing (20) consisting of a thermoplastic material; in particular, the insulating sheathing (20) of the heating strand (2) or heating wire is two-layered, and an inner layer (26) consists of PTFE, and an outer layer (27) consists of FEP.

11. Conduit connector (1) according to one of the preceding claims,
**characterized in that**
at least the part of the outside (15) of the conduit connector (1) on which the heating strand (2) or heating wire has been or is fixed and at least the outermost layer (27) of the insulating sheathing (20) of the heating strand (2) or heating wire consist of a thermoplastic synthetic material; in particular, the wall (14) of the conduit connector (1) consists of a polyamide or polyphthalamide, and the outermost layer (27) of the insulating sheathing (20) of the heating strand (2) or heating wire consists of TPE or TPC-ES.

12. Conduit connector (1) according to one of the preceding claims,
**characterized in that**
the melting-temperature of the material or materials of the single-layer or multi-layer outer layer (27) lies above the continuous-operation temperature to which the conduit connector (1) is exposed during operation; in particular, the melting-point or melting-range of the material of the inner layer (26) amounts to more than 140 °C and the melting-point or melting-range of the material of the outer layer (27) amounts to 120 °C to 230 °C.

13. Assembled media conduit (100) with at least one media conduit (5) and with at least one conduit connector (1) according to one of the preceding claims, arranged on an end of said media conduit.

14. Assembled media conduit (100) according to Claim 13,
**characterized in that**
at least one heating strand (2) or at least one heating wire has been provided which extends on the conduit connector (1) and along at least one section of the media conduit (5), or **in that** at least one heating strand (2) or at least one heating wire has been adhesively fixed or fastened on the conduit connector (2), and at least one heating strand (2) or at least one heating wire or some other heating element for heating the media conduit (5) has been provided; in particular, the at least one heating strand (2) or the at least one heating wire has been adhesively fixed or fastened on the outside of the conduit connector (1) and on the outside of the media conduit (5), or the at least one heating strand (1) or the at least one heating wire has been adhesively fixed or fastened on the conduit connector (1) and fixed or fastened on the media conduit in another form.

15. Method for applying at least one heating strand (2) or a heating wire on a moulded-element-free conduit connector (1) according to one of Claims 1 to 12, wherein the conduit connector (1) is wrapped with the heating strand (2) or heating wire in at least one partial region of its outside (15),
**characterized in that**
the wrapping of the heating strand or heating wire is fixed in position by at least one holding device (9), an adhesive bond of heating strand (2) or heating wire and conduit connector (1) is activated, and the holding device (9) is disengaged after the adherent connecting of the heating strand (2) or heating wire to the conduit connector (1).

## Revendications

1. Raccord de conduites (1) avec au moins une première partie de raccordement (10) pour la liaison avec au moins une première conduite de milieu (5), au moins une seconde partie de raccordement (11) pour la liaison avec au moins une seconde conduite de milieu et/ou un groupe et au moins une partie centrale (12) reliant les parties de raccordement (10, 11) l'une à l'autre et disposée entre celles-ci, dans lequel le raccord de conduites (1) est conçu sous la forme de pièce moulée en matière plastique et présente au moins une paroi (14) et au moins un canal d'écoulement intérieur (13) entouré par celle-ci et dans lequel le raccord de conduites (1) est pourvu dans au moins une zone partielle de la partie centrale (12) d'au moins un toron chauffant (2) ou d'un fil chauffant pour le chauffage électrique par enroulement, dans lequel le toron chauffant (2) ou le fil chauffant présente au moins un toron (21) ou au moins un fil et une gaine isolante (20) multicouche entourant ledit toron ou fil,
dans lequel l'au moins un toron chauffant (2) ou l'au moins un fil chauffant est fixé ou attaché de manière adhésive au moins dans la partie centrale (12) du raccord de conduites (1) à celui-ci à l'aide d'un moyen de fixation, dans lequel l'épaisseur de paroi de la gaine isolante multicouche présente après la fixation ou l'attachement adhésifs du toron chauffant (2) ou du fil chauffant sur le raccord de conduites (1) tout autour de l'au moins un toron (21) ou de l'au moins un fil une épaisseur suffisante pour l'isolation électrique, **caractérisé en ce que** le point de fusion ou la zone de fusion du matériau utilisé pour la couche intérieure (26) de la gaine isolante (20) du toron chauffant (2) ou du fil chauffant est supérieur au point de fusion ou à la zone de fusion du matériau utilisé pour la couche extérieure (27).

2. Raccord de conduites (1) selon la revendication 1,
**caractérisé en ce que**
l'épaisseur de paroi de la gaine isolante (20) bicouche après la fixation ou l'attachement adhésifs tout autour de l'au moins un toron (21) ou de l'au moins un fil atteint au moins 0,12 mm, en particulier 0,12 à 0,4 mm.

3. Raccord de conduites (1) selon la revendication 1 ou 2,
**caractérisé en ce que**
une couche extérieure (27) de la gaine isolante (20) est fixée ou attachée de manière adhésive sur le raccord de conduites (2).

4. Raccord de conduites (1) selon l'une quelconque des revendications précédentes,
**caractérisé en ce que**
au moins un élément de fixation ou au moins une zone de fixation (3) est prévu(e) pour la fixation adhésive du toron chauffant ou du fil chauffant sur la face extérieure (15) du raccord de conduites (1) et/ou **en ce qu'**au moins un élément de fixation (7, 8) à effet adhésif ou une zone de fixation (3) à effet adhésif est prévu(e) sur la face extérieure (15) du raccord de conduites.

5. Raccord de conduites (1) selon l'une quelconque des revendications précédentes,
**caractérisé en ce que**
au moins un point de fixation (4) est prévu en tant que point de renvoi pour le toron chauffant (2) ou le fil chauffant.

6. Raccord de conduites (1) selon l'une quelconque des revendications 1 à 3 ou 5,
**caractérisé en ce que**
au moins la partie à enrouler ou enroulée avec le toron chauffant (2) ou le fil chauffant, de la face extérieure (15) du raccord de conduites (1) est pourvue, en particulier revêtue ou pourvue par rétraction, d'au moins un matériau à effet adhésif (16), le matériau étant en particulier du perfluoroéthylènepropylène (FEP).

7. Raccord de conduites (1) selon l'une quelconque des revendications précédentes,
**caractérisé en ce que**
la longueur de toron chauffant (I) ou la longueur de fil chauffant s'étend de 140 à 600 mm, étant précisé que la longueur de toron chauffant (B-C) ou longueur de fil chauffant prévue pour la fixation adhésive sur le raccord de conduites (1) s'étend de 30 à 580 mm et la longueur de toron chauffant (22, 23, D-B, C-E) ou longueur de fil chauffant destinée à être appliquée sur la conduite de milieu s'étend de 10 à 100 mm.

8. Raccord de conduites (1) selon l'une quelconque des revendications précédentes,
**caractérisé en ce que**
la première partie de raccordement (10) est conçue en tant que tige creuse présentant un canal d'écoulement (13) et est enroulée de manière ciblée côté extérieur avec le toron chauffant (2) ou fil chauffant.

9. Raccord de conduites (1) selon l'une quelconque des revendications précédentes,
**caractérisé en ce que**
la première conduite de milieu (5) est fixée sur la première partie de raccordement (10) par liaison de matière, en particulier par soudage laser ou soudage par friction.

10. Raccord de conduites (1) selon l'une quelconque des revendications précédentes,
**caractérisé en ce que**
le raccord de conduites (1) est constitué au moins côté extérieur d'un matériau thermoplastique, l'au moins un toron chauffant (2) ou l'au moins un fil chauffant présente une gaine isolante (20) multicouche composée d'un matériau thermoplastique, en particulier la gaine isolante (20) du toron chauffant (2) ou du fil chauffant est bicouche et une couche intérieure (26) est constituée de PTFE et une couche extérieure (27) de FEP.

11. Raccord de conduites (1) selon l'une quelconque des revendications précédentes,
**caractérisé en ce que**
au moins la partie de la face extérieure (15) du raccord de conduites (1), sur laquelle est fixé ou sera fixé le toron chauffant (2) ou le fil chauffant, et au moins la couche la plus extérieure (27) de la gaine isolante (20) du toron chauffant (2) ou du fil chauffant sont constituées d'une résine thermoplastique, en particulier la paroi (14) du raccord de conduites (1) d'un polyamide ou polyphtalamide et la couche la plus extérieure (27) de la gaine isolante (20) du toron chauffant (2) ou du fil chauffant de TPE ou TPC-ES.

12. Raccord de conduites (1) selon l'une quelconque des revendications précédentes,
**caractérisé en ce que**
la température de fusion du matériau ou des matériaux de la couche extérieure (27) monocouche ou multicouche se situe au-dessus de la température de fonctionnement continue à laquelle le raccord de conduites (1) est exposé pendant le fonctionnement, en particulier le point de fusion ou la zone de fusion du matériau de la couche intérieure (26) atteint plus de 140 °C et le point de fusion ou la zone de fusion du matériau de la couche extérieure (27) atteint 120 à 230 °C.

13. Conduite de milieu assemblée (100) avec au moins une conduite de milieu (5) et au moins un raccord de conduites (1) disposé du côté de l'une des extrémités de celle-ci selon l'une quelconque des revendications précédentes.

14. Conduite de milieu assemblée (100) selon la revendication 13,
**caractérisée en ce que**
au moins un toron chauffant (2) ou au moins un fil chauffant est prévu, qui s'étend sur le raccord de conduites (1) et le long d'au moins une partie de la conduite de milieu (5), ou **en ce qu'**au moins un toron chauffant (2) ou au moins un fil chauffant est fixé ou attaché de manière adhésive sur le raccord de conduites (2) et au moins un toron chauffant (2) ou au moins un fil chauffant ou un autre élément chauffant est destiné à chauffer la conduite de milieu (5), en particulier l'au moins un toron chauffant (2) ou l'au moins un fil chauffant est fixé ou attaché de manière adhésive côté extérieur sur le raccord de conduites (1) et sur la conduite de milieu (5) ou l'au moins un toron chauffant (1) ou l'au moins un fil chauffant est fixé ou attaché de manière adhésive sur le raccord de conduites (1) et sur la conduite de milieu sous une autre forme.

15. Procédé d'appliquer au moins un toron chauffant (2) ou un fil chauffant sur un raccord de conduites (1) exempt d'élément moulé selon l'une des revendications 1 à 12, dans lequel le raccord de conduites (1) est enroulé dans au moins une zone partielle de sa face extérieure (15) avec le toron chauffant (2) ou le fil chauffant,
**caractérisé en ce que**
l'enroulement de toron chauffant ou de fil chauffant est fixé en position par au moins un dispositif de retenue (9), une liaison adhésive du toron chauffant (2) ou fil chauffant et du raccord de conduites (1) est activée, et le dispositif de retenue (9) est détaché après la liaison par adhérence du toron chauffant (2) ou du fil chauffant avec le raccord de conduites (1).
